# EUROPÄISCHE PATENTANMELDUNG

(11) **EP 4 353 380 A1**
(43) Veröffentlichungstag der Anmeldung: **17.04.2024**
(21) Anmeldenummer: 22201520.8
(22) Anmeldetag: 14.10.2022
(51) Int. Cl.: B21F 27/12, B21F 27/10, B21F 27/08, B25J 11/00

(54) **VERFAHREN UND VORRICHTUNG ZUR AUTOMATISIERTEN HERSTELLUNG EINES BEWEHRUNGSKORBES**

(71) Anmelder: Progress Maschinen & Automation AG, 39042 Brixen (IT)
(72) Erfinder: STUFLESSER, Alexander, 39040 Lajen (IT)
(74) Vertreter: Torggler & Hofmann Patentanwälte - Innsbruck

(57) **Zusammenfassung**

Verfahren zur automatisierten Herstellung eines Bewehrungskorbes (1), wobei die folgenden Verfahrensschritte, insbesondere in chronologischer Reihenfolge, durchgeführt werden:
- wenigstens zwei räumlich voneinander gesonderte Bewehrungskorbteile (2) für den Bewehrungskorb (1) werden bereitgestellt,
- die wenigstens zwei Bewehrungskorbteile (2) werden automatisiert bereichsweise ineinandergeschoben, sodass sich ein gemeinsamer und bereichsweise über die wenigstens zwei Bewehrungskorbteile (2) erstreckender Überlappungsbereich (3) bildet, und
- die wenigstens zwei Bewehrungskorbteile (2) werden in dem gemeinsamen Überlappungsbereich (3) automatisiert relativ zueinander zur Bildung des Bewehrungskorbes (1) fixiert.

Die Erfindung betrifft auch eine Vorrichtung zur automatisierten Herstellung eines Bewehrungskorbes.

## Beschreibung

Die Erfindung betrifft ein Verfahren zur automatisierten Herstellung eines Bewehrungskorbes. Des Weiteren betrifft die Erfindung eine Vorrichtung, insbesondere Bewehrungskorbproduktionsanlage, zur automatisierten Herstellung eines Bewehrungskorbes, insbesondere über ein solches Verfahren. Weiters betrifft die Erfindung eine solche Vorrichtung mit wenigstens zwei Bewehrungskorbteilen.

Bewehrungskörbe sind insbesondere bei Wänden oder Fenstern essentiell, um eine Stabilität in der Fertigung erhöhen und die Standzeit steigern zu können. Bewehrungskörbe sind in diesem Zusammenhang erforderlich, um beispielsweise zu verhindern, dass Beton aufklafft oder die Wand durch platzenden Beton bricht. Bewehrungskörbe werden üblicherweise vor Ort an die Anforderungen der Wand angepasst, wobei auch in Produktionsstätten insbesondere bei steigender Komplexität der Bewehrungskörbe die manuelle Produktion unabdingbar ist. Eine automatisierte Vorfertigung in der Produktionsstätte als Vorfertigung - geeignet für den direkten Einsatz an der Baustelle - stellt in der Bauindustrie ein lange bestehendes Bedürfnis dar, wobei jedoch mit steigendem Automatisierungsgrad nicht nur ein hoher fertigungstechnischer Aufwand einhergeht, sondern aufgrund der erhöhten Komplexität auch unweigerlich technische Hürden bedingt sind, sodass der Automatisierungsgrad bei trivialen longitudinalquaderförmigen Bewehrungskörben mit spezifischem Drahtdurchmesser als Randbedingung abseits von gebogenen, verstärkten oder an komplexe Geometrien angepassten Bewehrungskörben endet. Als Alternative werden herkömmliches manuelles Handling, manuelle Schweißvorgänge oder manuelle Fixierungen zur Hemmung eines relativen Verrutschens der Bewehrungskorbkomponenten in Kauf genommen.

Nachteilig am Stand der Technik ist, dass automatisiert produzierbare Bewehrungskörbe fertigungsbedingt auf quaderförmige - insbesondere mit zumindest einer offenen Bewehrungskorbseite - beschränkt sind und somit lediglich eine eingeschränkte Produktvielfalt mit einer Vielfalt an erforderlichen Sonderanfertigungen bedingt ist. Diese Sonderanfertigungen sind in der Bauindustrie mit schweren Hebearbeiten und giftigen Schweißdämpfen verbunden, wodurch die Arbeitssicherheit reduziert wird. Produktionsschritte wie Balkenbiegen limitieren die Möglichkeit von Geometrien zusätzlich. Durch den manuellen Aufwand können Qualitätsstandards nicht hinreichend sichergestellt werden, wobei auch eine Qualitätssicherung bei einer Vielfalt an variierenden Bewehrungskörben nur schwierig gewährleistbar ist. Es gilt eine hohe Vielfalt an Bewehrungskörben unter Randbedingungen wie Traglast von Maschinen oder korrektem Schweißsystem zu berücksichtigen. Manuell bedingte Verschmutzungen durch Richt-, Biege- und Schweißprozesse mindern zusätzlich die Güte der Bewehrungskörbe, wobei zudem ein hoher zeitlicher sowie personeller Aufwand erforderlich ist. Eine akkurate Positionierung von Bewehrungsstäben zur Bildung eines stabilen Bewehrungskorbes mit präziser Form, exakter Dimensionierung sowie geringer Bauteiltoleranzen über eine hohe Stückzahl hinweg ist ein weiteres Erfordernis, welches im Stand der Technik nicht hinreichend erwirkt wird.

Eine Anlage zur Herstellung von Bewehrungskörben ist bereits aus der Schrift WO 2015/082115 A1 bekannt, wobei an der Baustelle vor Ort sukzessive triviale ringförmige Bewehrungssegmente für ein individuelles Bauprojekt unterstützt durch zwei Roboter in einem kontinuierlichen Prozess angebracht werden.

Die objektive technische Aufgabe der vorliegenden Erfindung besteht daher darin, ein gegenüber dem Stand der Technik verbessertes Verfahren sowie eine Vorrichtung zur automatisierten Herstellung eines Bewehrungskorbes anzugeben, bei welchen die Nachteile des Standes der Technik zumindest teilweise behoben sind, und welche sich insbesondere durch einen hohen Automatisierungsgrad bei komplexen Geometrien und geringem Herstellungsaufwand auszeichnen.

Diese Aufgabe wird durch die Merkmale des Anspruches 1 gelöst.

Es ist demnach erfindungsgemäß vorgesehen, dass folgende Verfahrensschritte, insbesondere in chronologischer Reihenfolge, durchgeführt werden:
- wenigstens zwei räumlich voneinander gesonderte Bewehrungskorbteile für den Bewehrungskorb werden bereitgestellt,
- die wenigstens zwei Bewehrungskorbteile werden automatisiert bereichsweise ineinandergeschoben, sodass sich ein gemeinsamer und bereichsweise über die wenigstens zwei Bewehrungskorbteile erstreckender Überlappungsbereich bildet, und
- die wenigstens zwei Bewehrungskorbteile werden in dem gemeinsamen Überlappungsbereich automatisiert relativ zueinander zur Bildung des Bewehrungskorbes fixiert.

Dadurch wird es erst ermöglicht, dass komplexe und stabile Bewehrungskörbe mit hoher Präzision modulartig automatisch gefertigt werden können, welche komplexe Geometrien durch den gebildeten Überlappungsbereich und der lagesicheren Verbindung der vorgefertigten Bewehrungskorbteile relativ zueinander in diesem Bereich gewährleisten.

Zudem sind Quaderformen als komplexe Geometrie mit ineinander verschachtelten Bewehrungskorbteilen möglich, bei welchen sowohl eine Stabilität als auch eine Dimensionierung flexibel, komfortabel und individuell an das gewünschte Anforderungsprofil adjustierbar ist.

Hinzu kommt die positive Eigenschaft, dass der Bewehrungskorb an einer einzigen Anlage beziehungsweise durch eine einzige Vorrichtung und/oder in einem unmittelbar zusammenhängenden Prozesszyklus fertigbar ist. Insbesondere kann die Anzahl an Maschinen für die Verbindung der Bewehrungskorbteile erheblich reduziert werden. Eine interne Logistik kann dadurch besonders effektiv optimiert werden.

Darüber hinaus wird durch das Steckprinzip und dem damit verbundenen Verbindungsschritt die Produktivität gesteigert und eine Anzahl an benötigten Facharbeitern kann pro Gewichtseinheit an produzierten Bewehrungskörben reduziert werden. Des Weiteren wird ein höherer Grad an Arbeitssicherheit erreicht, da das geschulte Fachpersonal nicht mehr giftigen Schweißdämpfen oder verletzungsanfälligen Maschinen ausgesetzt sind sowie trotz komplexer Geometrien der Bewehrungskörbe keine schweren Bewehrungsstäbe heben müssen, wodurch weiters die Qualität durch passgenaue Fertigung gesteigert wird.

Wie eingangs ausgeführt, wird Schutz auch begehrt für eine Vorrichtung, insbesondere Bewehrungskorbproduktionsanlage, zur automatisierten Herstellung eines Bewehrungskorbes, insbesondere über ein solches Verfahren, umfassend
- wenigstens einen Roboterarm, welcher eine Schweißeinrichtung und/oder eine Verbindungsvorrichtung zum Fixieren von Bewehrungskorbteilen und eine Klemmgreifvorrichtung zum Ineinanderschieben von Bewehrungskorbteilen und
- wenigstens eine Steuerungs- und/oder Regelungseinrichtung zur Steuerung des Roboterarms, wobei die Steuerungs- und/oder Regelungseinrichtung dazu konfiguriert ist, den Bewehrungskorb zumindest abschnittsweise automatisiert zu fertigen, wobei insbesondere vorgesehen ist, dass die Steuerungs- und/oder Regelungseinrichtung dazu eingerichtet ist, wenigstens zwei Bewehrungskorbteile ineinanderzuschieben und miteinander zu fixieren.

Die Kombination einer Schweißeinrichtung und/oder einer Verbindungsvorrichtung sowie einer Klemmgreifvorrichtung an einem Grundkörper oder einem Roboterarm kann im Zusammenhang mit Bewehrungskörben als Zentrier-Schweiß-Greifer bezeichnet werden.

Zumindest abschnittsweise meint in diesem Kontext, dass einzelne Prozessschritte auch manuell durchgeführt oder durch anderweitigen Bauteilkomponenten definiert werden können.

Wie eingangs ausgeführt, wird Schutz auch begehrt für eine solche Vorrichtung mit wenigstens zwei Bewehrungskorbteilen, welche dazu ausgebildet sind, zur Bildung eines Bewehrungskorbes mit von einer Quaderform abweichender Geometrie mit vordefiniertem Überlappungsbereich zur Bildung eines Bewehrungskorbes ineinandergeschoben zu werden, wobei vorzugsweise vorgesehen ist, dass wenigstens einer der wenigstens zwei Bewehrungskorbteile in dem vordefinierten Überlappungsbereich zum Ineinanderschieben bewehrungslängsstabfrei oder bewehrungsstabfrei ausgestaltet ist.

Die Bewehrungskorbteile können eine triviale Quaderform ohne Verschachtelung aufweisen, wobei diese im Bereich der zu generierenden Überlappung beispielsweise keine Bewehrungsquerstäbe (oder Bewehrungslängsstäbe oder Bewehrungsstäbe in vertikaler Richtung) aufweisen können, um ein Einführen der Bewehrungskorbteile zur Bildung des Überlappungsbereiches oder der Überlappungsbereiche gewährleisten zu können.

Die Merkmale der Verfahrensansprüche sind mutatis mutandis bei den Vorrichtungsansprüchen anwendbar und vice versa. Vorteilhafte Ausführungsformen der Erfindung sind in den abhängigen Ansprüchen definiert.

Gemäß einer vorteilhaften Ausgestaltung der Erfindung ist vorgesehen, dass wenigstens einer der folgenden vorbereitenden Verfahrensschritte zur Bereitstellung der wenigstens zwei Bewehrungskorbteile, vorzugsweise automatisiert, durchgeführt wird:
- ein Bewehrungsstabcoil wird durch wenigstens eine Richtmaschine begradigt und in Form einer Vielzahl an Bewehrungsstäben mit vordefiniertem Abmaß abgelängt
- die Vielzahl an Bewehrungsstäben wird, vorzugsweise durch einen Roboterarm, in einem vordefinierten Raster angeordnet
- die Vielzahl an Bewehrungsstäben wird, vorzugsweise über Widerstandspunktschweißen durch eine Schweißeinrichtung, stoffschlüssig miteinander verbunden und/oder, vorzugsweise mittels einer Verbindungsvorrichtung, über Befestigungsmittel, vorzugsweise in Form von Draht, lagesicher zueinander fixiert, sodass eine Bewehrungsmatte gebildet wird
- die Bewehrungsmatte wird durch ein Transportmittel, vorzugsweise Transportachse oder Roboterarm, manövriert und/oder durch eine Mattenbiegemaschine in Form eines Bewehrungskorbteiles gebogen.

Durch eine Automatisierung der Bereitstellung von Halbzeugen für die Bewehrungskorbteile kann eine Fertigungszykluszeit besonders effizient gestaltet werden.

Vorteilhafter Weise ist vorgesehen, dass die wenigstens zwei Bewehrungskorbteile über ein Transportmittel in Form eines Roboterarmes und/oder in Form einer Transportachse ineinandergeführt werden.

Dadurch kann ein manueller Aufwand in der Produktion zusätzlich reduziert werden. Das Transportmittel kann im Allgemeinen auch beispielsweise in Form eine Rollenbahn, eines zusätzlichen Roboterarms, des selbigen Roboterarms oder dergleichen vorliegen.

Als günstig hat sich erwiesen, dass über wenigstens eine Sensorik, vorzugsweise Distanzlaser, eine Position wenigstens eines Bewehrungsstabes zumindest eines Bewehrungskorbteiles zur Vermeidung von Kollisionen mit einem Roboterarm bestimmt wird.

Dadurch können Kollisionen in der Herstellung gehemmt werden und eine Zuverlässigkeit sowie Qualität der Vorrichtung garantiert werden.

Gemäß einer vorteilhaften Ausführungsform der vorliegenden Erfindung ist vorgesehen, dass ein Roboterarm, vorzugsweise eine Klemmgreifvorrichtung des Roboterarms, die wenigstens zwei Bewehrungskorbteile zur Fixierung von Bewehrungsstäben der wenigstens zwei Bewehrungskorbteile aufnimmt, wobei vorzugsweise vorgesehen ist, dass der Roboterarm die Bewehrungsstäbe entgegen der Schwerkraft von unten her greift und/oder die Bewehrungsstäbe zunächst lose auf dem Roboterarm aufliegen und anschließend durch die Klemmgreifvorrichtung umschlossen werden und/oder der Roboterarm die Bewehrungsstäbe im Wesentlichen parallel zueinander zusammendrückt.

Dadurch kann eine feste Fixierung der Bewehrungskorbteile besonders begünstigt werden.

Eine vorteilhafte Variante der Erfindung besteht darin, dass ein Roboterarm, vorzugsweise eine Schweißeinrichtung oder Verbindungsvorrichtung, die wenigstens zwei Bewehrungskorbteile, vorzugsweise über wenigstens einen Schweißunkt oder Befestigungsmittel, miteinander relativ zueinander fixiert.

Besonders bevorzugt ist vorgesehen, dass die Aufnahme der wenigstens zwei Bewehrungskorbteile und die Fixierung der wenigstens zwei Bewehrungskorbteile durch selbigen Roboterarm durchgeführt werden, wobei der Roboterarm vorzugsweise als Zentrier-Schweiß-Greifarm ausgebildet ist.

Dadurch erfüllt der Roboterarm eine Doppelfunktion des Greifens/Klemmens und der Fixierung/Verbindung, wodurch die Vorrichtung besonders simpel und mit geringem erforderlichen Bauraum sowie reduzierten prozesstechnischen Berücksichtigungen oder Wartungsarbeiten ausgestaltet werden kann.

Bei einem Ausführungsbeispiel der Erfindung ist vorgesehen, dass der Bewehrungskorb mit einer von einer Quaderform abweichenden Geometrie, insbesondere T-Form, L-Form, X-Form oder dergleichen, gebildet wird.

Die Form des Bewehrungskorbes ist jedoch nicht auf eine konkrete Form beschränkt und kann im Wesentlichen beliebig gestaltet und/oder zusammengesetzt werden. Bei einer verschachtelten Quaderform des Bewehrungskorbes oder von Teilbereichen des Bewehrungskorbes kann durch den Überlappungsbereich das Produktspektrum an Bewehrungskörben zusätzlich einfach erweitert und flexibel angepasst werden - beispielsweise über eine Software einer Steuerungs- und/oder Regelungseinrichtung zur automatischen Erstellung von Prozessabläufen und/oder Bewegungsabläufen des Roboterarms oder einer Vielzahl an Roboterarmen für einen spezifischen Bewehrungskorb.

Gemäß einem bevorzugten Ausführungsbeispiel der Erfindung ist vorgesehen, dass wenigstens einer der wenigstens zwei Bewehrungskorbteile in dem Überlappungsbereich zur Ineinanderschiebung der wenigstens zwei Bewehrungskorbteile frei von Bewehrungslängsstäben und/oder Bewehrungsstäben bereitgestellt werden, wobei vorzugsweise vorgesehen ist, dass wenigstens ein Bewehrungslängsstab, besonders bevorzugt von einer gegebenenfalls vorhandenen Richtmaschine, bereitgestellt wird und anschließend an den Fixierungsprozessschritt der wenigstens zwei Bewehrungskorbteile, besonders bevorzugt automatisiert, am Bewehrungskorb befestigt wird.

Das Einbringen der Bewehrungslängsstäbe in den Bewehrungskorb kann als nachgelagerter Nachbearbeitungsschritt zur Vervollständigung des Bewehrungskorbes angesehen werden; im Allgemeinen kann der Bewehrungskorb auch erst durch das Anordnen der Bewehrungslängsstäbe als vollständig generiert erachtet werden. Durch das Zusammenfügen der Bewehrungskorbteile können im Überlappungsbereich keine Bewehrungslängsstäbe beziehungsweise bei Quaderform keine Bewehrungsquerstäbe (gegebenenfalls keine vertikalen Bewehrungsstäbe) liegen. Diese können im Nachgang des Schweißprozesses beispielsweise über eine verfahrbare Rollenbahn in den Korb eingefädelt werden, um eine Stabilität des Bewehrungskorbes zu erhöhen. Die zusätzlichen Bewehrungslängsstäbe für diesen Bereich können von der Richtmaschine bereitgestellt werden und können über die Rollenbahn in ein Puffermagazin gelangen, sodass das Puffermagazin die Bewehrungslängsstäbe im Anschluss in die verfahrbare Rollenbahn abkippt. Besonders bevorzugt wird der Bewehrungskorb zur Einbringung der Bewehrungslängsstäbe auf einem, vorzugsweise höhenverstellbaren, Tisch zum Einschieben der Bewehrungslängsstäbe abgelegt.

Weiters ist bevorzugt vorgesehen, dass der wenigstens eine Bewehrungslängsstab, vorzugsweise automatisiert, über wenigstens einen Dorn an und/oder in dem Bewehrungskorb angebracht wird, wobei wenigstens ein Roboterarm, vorzugsweise Einlegeroboter, den wenigstens einen Bewehrungslängsstab auf einer Rollenbahn ablegt und/oder der wenigstens eine Bewehrungslängsstab durch den Roboterarm oder die Rollenbahn in den wenigstens einen Dorn oder den Bewehrungskorb eingeschoben wird, wobei der wenigstens eine Dorn zusammen mit dem wenigstens einen Bewehrungslängsstab in den Bewehrungskorb eingeschoben wird, wobei vorzugsweise vorgesehen ist, dass der wenigstens eine Dorn automatisiert vereinzelt und/oder in einem Magazin zwischengelagert wird.

Im Allgemeinen kann der Einlegeroboter durch einen weiteren oder den Roboterarm gebildet werden oder die automatisierte Einführung der Bewehrungslängsstäbe durch manuelle Tätigkeiten ersetzt werden. Im Allgemeinen ist die Anzahl an Roboterarmen beliebig, bevorzugt ist jedoch zumindest für das Greifen und Fixieren lediglich ein Roboterarm erforderlich. Durch den Dorn wird ein Anordnen der Bewehrungslängsstäbe erleichtert.

In einer weiteren Ausführungsform kann vorgesehen sein, dass die Schweißeinrichtung und/oder die Verbindungsvorrichtung und die Klemmgreifvorrichtung an einem gemeinsamen Grundkörper bewegungsgekoppelt und/oder in örtlicher Nähe zueinander angeordnet sind.

Dadurch ist keine separate Ansteuerung einer Schweißvorrichtung zur Fixierung nach erfolgter Klemmung der Bewehrungskorbteile erforderlich. Zudem können Taktzeiten in der Fertigung reduziert werden und eine Anzahl an teuren Maschinen reduziert werden.

Gemäß einer vorteilhaften Ausgestaltung der Erfindung ist vorgesehen, dass der Roboterarm
- als Mehrachsroboterarm ausgestaltet ist und/oder
- eine lineare Bewegungseinrichtung umfasst und/oder
- eine Schweißzange mit integriertem Schweißbrenner umfasst und/oder
- eine Stromquelle und/oder eine Drahtspule umfasst und/oder
- eine Sensorik zur Lagebestimmung und/oder Distanzbestimmung umfasst.

Bei einer Schweißzange mit integriertem Schweißbrenner kann die Fixierung der Bewehrungskorbteile besonders günstig erfolgen.

Besonders bevorzugt ist vorgesehen, dass die Vorrichtung eine Richtmaschine und/oder einen Einlegeroboter und/oder eine Rollenbahn und/oder eine Transportachse und/oder eine Mattenbiegemaschine umfasst.

Dadurch kann im Wesentlichen die gesamte Wertschöpfungskette zur Herstellung des Bewehrungskorbes an einer Anlage abgedeckt werden ohne auf manuelle Tätigkeiten - insbesondere bei geänderten Anforderungen an einen Bewehrungskorb - angewiesen zu sein.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a-3: Bewehrungskörbe variierender Geometrie, welche erfindungsgemäß automatisiert fertigbar sind, in einer schematischen Querschnittsdarstellung,
- Fig. 4: eine Bewehrungskorbproduktionsanlage mit einer Vorrichtung gemäß einer besonders bevorzugten Ausführungsform in einer Ansicht von oben,
- Fig. 5: die Vorrichtung gemäß dem Ausführungsbeispiel nach Fig. 4 in einer Seitenansicht,
- Fig. 6: einen Roboterarm der Vorrichtung gemäß dem Ausführungsbeispiel nach Fig. 5 in Form eines Zentrier-Schweiß-Greifarms mit einer Schweißeinrichtung und einer Klemmgreifvorrichtung in einer Ansicht von der Seite,
- Fig. 7: den Zentrier-Schweiß-Greifarm gemäß der Ausführungsform nach Fig. 6 in einer vergrößerten Darstellung des freien Endes des Roboterarms,
- Fig. 8, 9: zwei Bewehrungskorbteile, welche im Zuge der Fertigung des Bewehrungskorbes in L-Form ineinandergeschoben und stoffschlüssig miteinander verbunden werden, in zwei aufeinanderfolgenden Prozessschritten in einer Seitenansicht,
- Fig. 10: einen Bewehrungskorb, welcher durch eine Vorrichtung gemäß dem Ausführungsbeispiel nach Fig. 6 in verschachtelter Quaderform hergestellt wird, in einer Ansicht von der Seite,
- Fig. 11: zwei Bewehrungskorbteile vor einem Verbindungsprozessschritt durch eine Vorrichtung gemäß dem Ausführungsbeispiel nach Fig. 6 in Seitenansicht,
- Fig. 12-15: den Zentrier-Schweiß-Greifarm gemäß der Ausführungsform nach Fig. 6 in unterschiedlichen Stellungen vor einem Schweiß- oder Verbindungsvorgang von Bewehrungskorbteilen jeweils in Seitenansicht,
- Fig. 16-18: einen dem Verbindungsvorgang nachgelagerten Verfahrensschritt der Einbringung von Bewehrungslängsstäben in einen Bewehrungskorb in einer Seitenansicht der Anlage, einer perspektivischen Ansicht des Bewehrungslängsstabes mit Dorn sowie dem Bewehrungskorb im Zuge der Endfertigung.

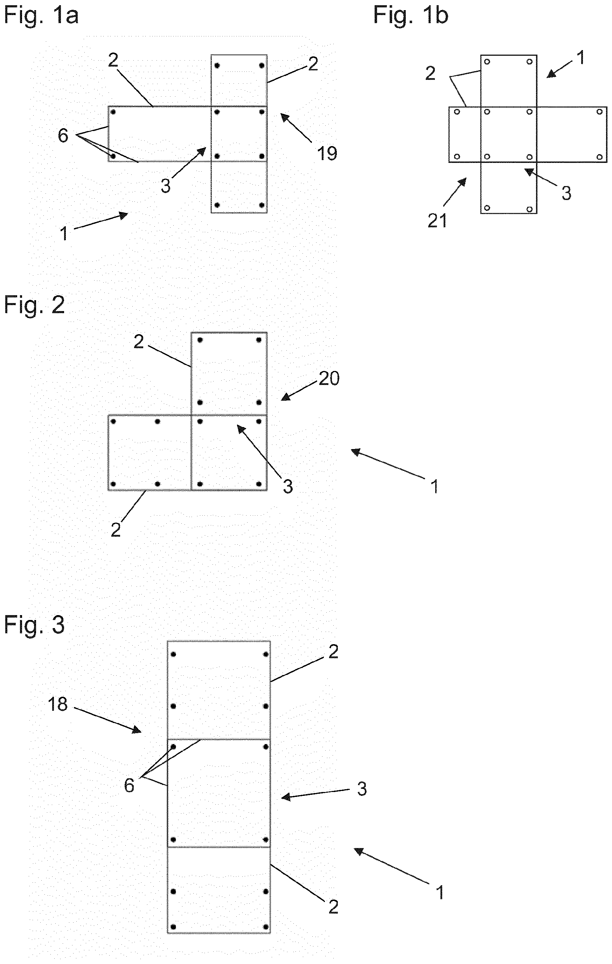

Fig. 1a zeigt einen Bewehrungskorb 1 mit komplexer Geometrie, wobei zwei Bewehrungskorbteile 2 ineinander verschachtelt vorliegen und bei diesem Ausführungsbeispiel eine von einer Quaderform 18 abweichenden Geometrie als T-Form 19 vorliegt.

Fig. 1b zeigt einen Bewehrungskorb 1 umfassend zwei Bewehrungskorbteile 2, welche zur Bildung des Bewehrungskorbes 1 über eine X-Form 21 miteinander verbunden sind.

Fig. 2 zeigt einen Bewehrungskorb 1, welcher automatisiert über zwei Bewehrungskorbteile 2 in L-Form 20 gebildet wurde.

Fig. 3 zeigt einen Bewehrungskorb 1, wobei zwei Bewehrungskorbteile 2 - wie folgend expliziert - ineinandergeschoben wurden und miteinander verbunden wurden, sodass ein verschachtelter Bewehrungskorb 1 gebildet wird.

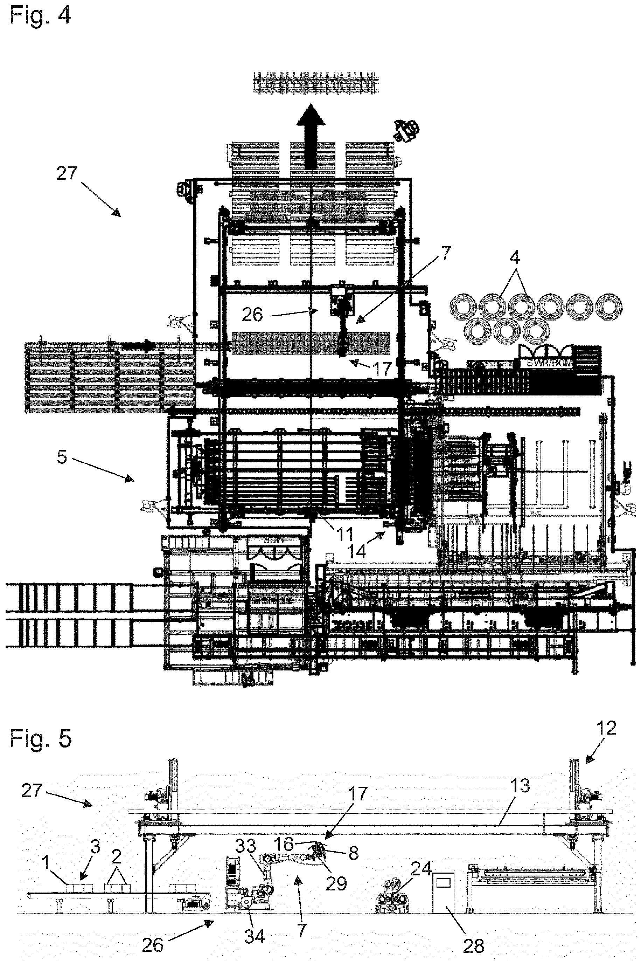

Die automatisierte Fertigung der Bewehrungskörbe 1 der Figuren 1a bis 3 kann exemplarisch an der Bewehrungskorbproduktionsanlage 27 gemäß Fig. 4 erläutert werden, wobei im Verfahren zur automatisierten Herstellung des Bewehrungskorbes 1 zumindest zwei räumlich voneinander gesonderte Bewehrungskorbteile 2 für den Bewehrungskorb 1 bereitgestellt werden, welche automatisiert zumindest bereichsweise ineinandergeschoben werden, sodass sich ein gemeinsamer und bereichsweise über die wenigstens zwei Bewehrungskorbteile 2 erstreckender Überlappungsbereich 3 bildet, und anschließend werden zwei Bewehrungskorbteile 2 in dem gemeinsamen Überlappungsbereich 3 automatisiert relativ zueinander zur Bildung des Bewehrungskorbes 1 fixiert.

Die Bewehrungskorbproduktionsanlage 27 umfasst eine Vielzahl an Stationen, beginnend mit einer Produktionsstation zur Bereitstellung von Drahtmaterial bis hin zu einer Logistikstation zum Weitertransport der fertiggestellten Bewehrungskörbe 1. Die Bewehrungskörbe 1 können in einer nachgelagerten Fertigungsstätte beispielsweise noch veredelt oder in Form eines Einbringens von Bewehrungslängsstäben 22 nachbearbeitet werden; die Bewehrungskörbe 1 liegen jedoch in dieser Ausführungsform bereits in der verbundenen Form vor und die Bewehrungslängsstäbe 22 werden direkt in der Bewehrungskorbproduktionsanlage 27 dem Bewehrungskörben 1 zur Vervollständigung hinzugefügt, sodass die Bewehrungskörbe 1 unmittelbar zum Versand vorbereitet werden können.

Die Bewehrungskorbproduktionsanlage 27 umfasst eine Richtmaschine 5 und eine Mattenbiegemaschine 14.

Zur Bereitstellung der Bewehrungskorbteile 2 werden folgende im Allgemeinen nicht zwingend erforderliche Verfahrensschritte durchgeführt:
- ein Bewehrungsstabcoil 4 wird durch die Richtmaschine 5 begradigt und in Form einer Vielzahl an Bewehrungsstäben 6 mit vordefiniertem Abmaß abgelängt,
- die Vielzahl an Bewehrungsstäben 6 wird durch einen Roboterarm 7 in einem vordefinierten Raster angeordnet,
- die Vielzahl an Bewehrungsstäben 6 wird über Widerstandspunktschweißen durch eine Schweißeinrichtung 8 stoffschlüssig miteinander verbunden, sodass eine Bewehrungsmatte 11 gebildet wird, und
- die Bewehrungsmatte 11 wird durch ein Transportmittel 12 in Form einer Transportachse 13 oder eines Roboterarm 7 manövriert und durch eine Mattenbiegemaschine 14 in Form eines Bewehrungskorbteiles 2 gebogen.

Alternativ oder in Ergänzung zu der Verbindung der Bewehrungskorbteile 2 über die Schweißeinrichtung 8 kann im Allgemeinen auch beispielsweise eine lagesichere Fixierung der Bewehrungskorbteile 2 zueinander durch eine Verbindungsvorrichtung über Befestigungsmittel wie Draht oder Klammern erfolgen.

Fig. 5 zeigt eine bevorzugte Vorrichtung 26 der Bewehrungskorbproduktionsanlage 27 zur automatisierten Herstellung des Bewehrungskorbes 1, umfassend einen Roboterarm 7, welcher eine Schweißeinrichtung 8 zum Fixieren der Bewehrungskorbteile 2 und eine Klemmgreifvorrichtung 16 zum Ineinanderschieben der Bewehrungskorbteile 2 sowie eine Steuerungs- und/oder Regelungseinrichtung 28 zur Steuerung des Roboterarms 7, wobei die Steuerungs- und/oder Regelungseinrichtung 28 dazu konfiguriert ist, den Bewehrungskorb 1 automatisiert zu fertigen.

Die Steuerungs- und/oder Regelungseinrichtung 28 ist dazu eingerichtet beziehungsweise der Roboterarm 7 ist dazu programmiert, wenigstens zwei Bewehrungskorbteile 2 ineinanderzuschieben und miteinander zu fixieren.

Der Vorrichtung 26 sind ein Einlegeroboter 24 mit einer Transportachse 13 zur Einbringung von Bewehrungslängsstäben 22 in den Bewehrungskorb 1 zugeordnet, welcher Teil der Bewehrungskorbproduktionsanlage 27 ist.

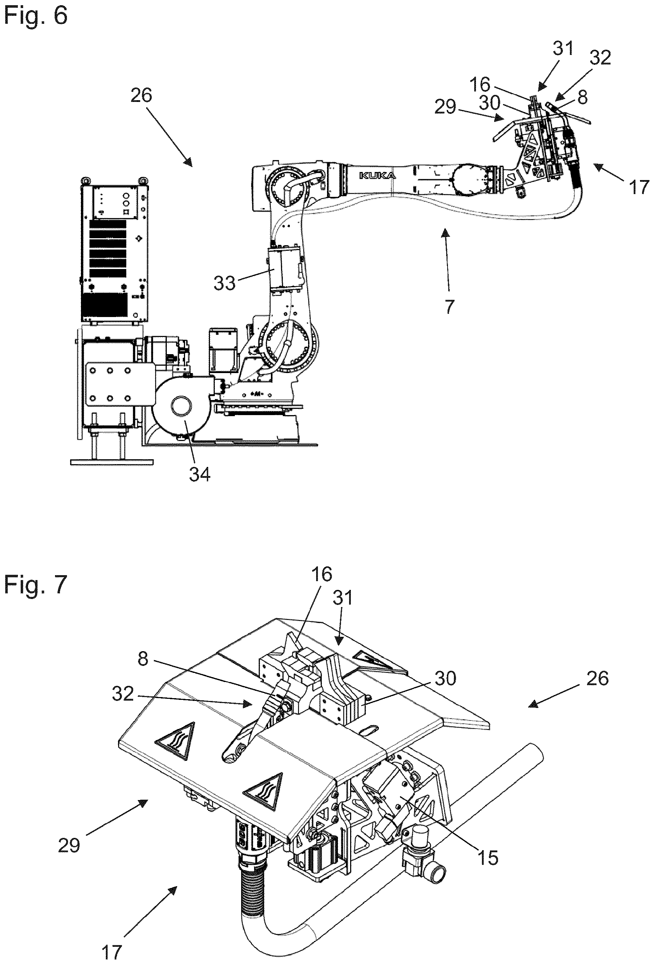

Fig. 6 zeigt, dass der Roboterarm 7 als Mehrachsroboterarm vorliegt und eine lineare Bewegungseinrichtung 30 zur Betätigung der Klemmgreifvorrichtung 16 an einem freien Ende des Roboterarms 7 umfasst.

Der Roboterarm 7 umfasst eine Schweißzange 31 mit integriertem Schweißbrenner 32, um die Bewehrungskorbteile 2 gleichzeitig zu greifen und miteinander lagesicher relativ zueinander zu verbinden.

Die Schweißeinrichtung 8 des Roboterarms 7 umfasst eine Stromquelle 33 und eine Drahtspule 34.

Der Roboterarm 7 kann alternativ oder in Ergänzung zur Schweißeinrichtung 8 eine Verbindungsvorrichtung umfassen, welche im Allgemeinen an selbigen Roboterarm 7 oder an einem gesonderten Roboterarm vorgesehen sein kann.

Die Schweißeinrichtung 8 (oder im Allgemeinen die Verbindungsvorrichtung) und die Klemmgreifvorrichtung 16 sind an einem gemeinsamen Grundkörper 29 bewegungsgekoppelt und in örtlicher Nähe zueinander angeordnet.

Fig. 7 zeigt, dass der Roboterarm 7 in Form eines Zentrier-Schweiß-Greifarm 17 mit kombinierter Schweißeinrichtung 8 und Klemmgreifvorrichtung 16 vorliegt.

Durch den Zentrier-Schweiß-Greifarm 17 kann die Aufnahme der Bewehrungskorbteile 2 und die Fixierung der Bewehrungskorbteile 2 durch selbigen Roboterarm 7 durchgeführt werden.

Der Roboterarm 7 umfasst eine Sensorik 15 zur Lagebestimmung oder Distanzbestimmung, welche als Distanzlaser ausgebildet ist.

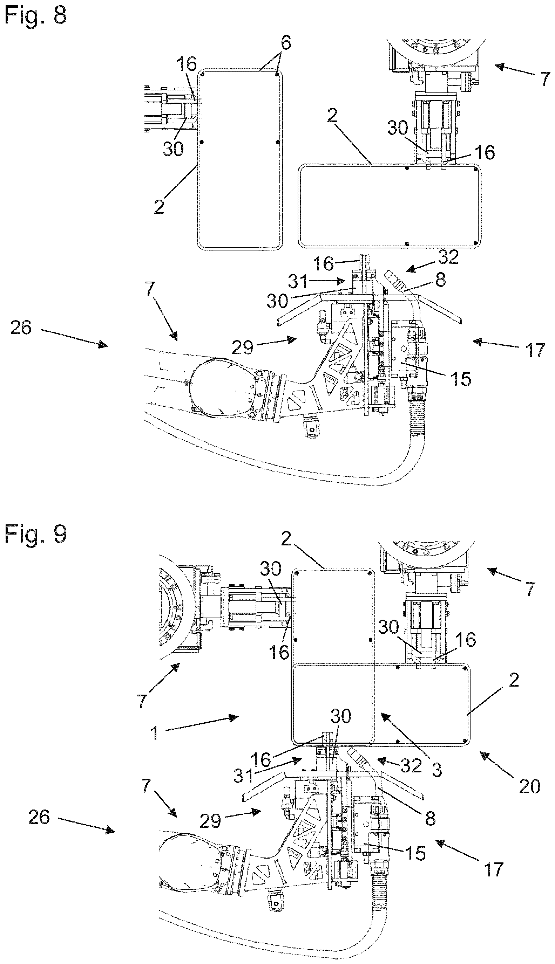

Fig. 8 zeigt die Vorrichtung 26 während der Herstellung eines Bewehrungskorbes 1 mit zwei Bewehrungskorbteilen 2, welche dazu ausgebildet sind, zur Bildung des Bewehrungskorbes 1 mit von einer Quaderform 18 abweichender Geometrie mit vordefiniertem Überlappungsbereich 3 zur Bildung des Bewehrungskorbes 1 ineinandergeschoben zu werden.

Zumindest einer oder beide Bewehrungskorbteile 2 ist/sind in dem vordefinierten Überlappungsbereich 3 zum Ineinanderschieben frei von Bewehrungslängsstäben 22 ausgestalte, sodass eine Kollision in der verschachtelten Anordnung der Bewehrungskorbteile 2 unterbunden wird.

Fig. 9 unterscheidet sich von Fig. 8 lediglich dahingehend, dass die zwei separaten Bewehrungskorbteile 2 bereits ineinandergeschoben wurden, sodass sich der Überlappungsbereich 3 der Bewehrungskorbteile 2 bildete, und dass der Roboterarm 7 die beiden Bewehrungskorbteile 2 zur Fixierung über die Schweißeinrichtung 8 fasste, um den Bewehrungskorb 1 zu generieren.

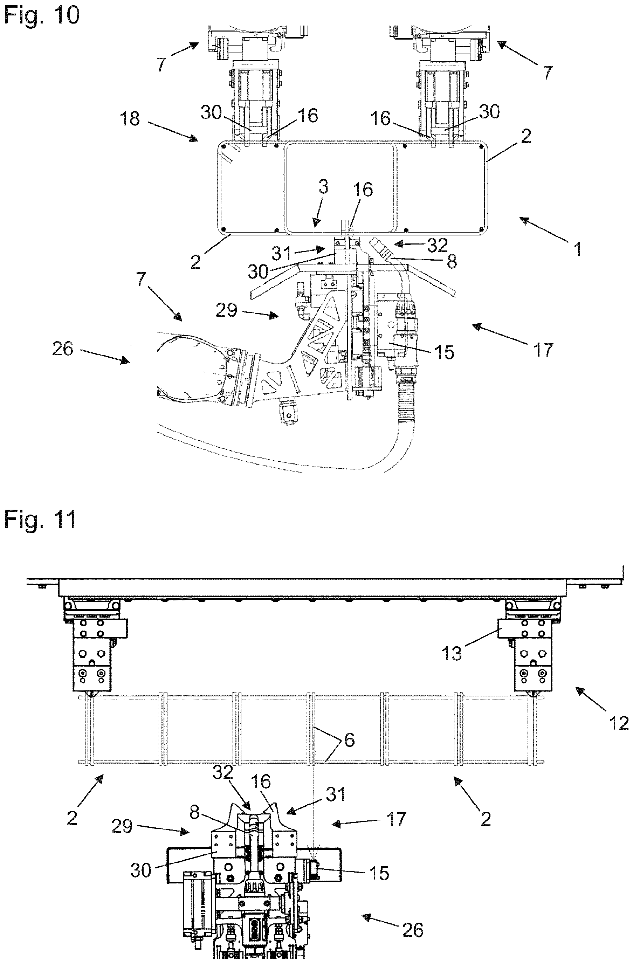

Fig. 10 zeigt ein analoges Verfahren zur Produktion eines Bewehrungskorbes 1 wie in Fig. 8 dargestellt, wobei in Fig. 10 die Bewehrungskorbteile 2 derart überlappend ineinandergeschoben, gehalten und fixiert werden, sodass sich eine Quaderform 18 des Bewehrungskorbes 1 ergibt, welche den verschachtelten Überlappungsbereich 3 umfasst.

Um den Überlappungsbereich 3 zu ermöglichen, ist zumindest einer der beiden Bewehrungskorbteile 2 für das Ineinanderschieben in diesem Bereich bewehrungsstabfrei ausgebildet.

Fig. 11 zeigt die Vorrichtung 26, wobei zwei Bewehrungskorbteile 2 über ein Transportmittel 12 in Form einer Transportachse 13 ineinandergeführt werden. Alternativ oder in Ergänzung zur Transportachse 13 kann ein weiterer oder selbiger Roboterarm 7 vorgesehen werden.

Über eine als Distanzlaser ausgestaltete Sensorik 15 wird über den Roboterarm 7 eine Position zumindest eines Bewehrungsstabes 6 zumindest eines Bewehrungskorbteiles 2 zur Vermeidung von Kollisionen mit dem Roboterarm 7 bestimmt.

Das Ineinanderschieben der Bewehrungskorbteile erfolgt über eine Transportachse 13.

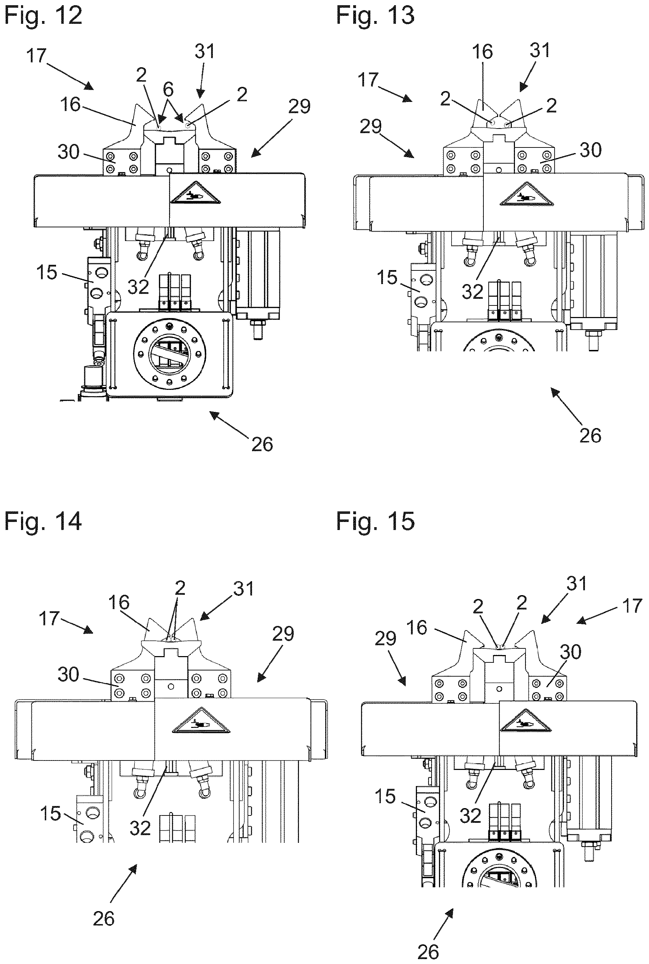

Fig. 12 bis 15 veranschaulichen den Ablauf des Verbindens zweier Bewehrungskorbteile 2 zur Bildung des Bewehrungskorbes 1, wobei der Roboterarm 7 über die Klemmgreifvorrichtung 16 die zwei Bewehrungskorbteile 2 zur Fixierung von Bewehrungsstäben 6 der zwei Bewehrungskorbteile 2 aufnimmt, wobei in Fig. 12 ersichtlich ist, dass der Roboterarm 7 die Bewehrungsstäbe 6 entgegen der Schwerkraft von unten her greift und die Bewehrungsstäbe 6 zunächst lose auf dem Roboterarm 7 aufliegen.

Wie in Fig. 13 und Fig. 14 ersichtlich, werden die Bewehrungsstäbe 6 der Bewehrungskorbteile 2 anschließend durch die Klemmgreifvorrichtung 16 umschlossen und durch die Klemmgreifvorrichtung 16 des Zentrier-Schweiß-Greifarms 17 parallel zueinander zusammendrückt.

In Fig. 15 wurden die zwei Bewehrungskorbteile 2 durch die Schweißeinrichtung 8 (oder gegebenenfalls die Verbindungsvorrichtung) des Roboterarms 7 über zumindest einen Schweißunkt (oder gegebenenfalls über Befestigungsmittel wie Drähte oder Klammern) miteinander relativ zueinander fixiert.

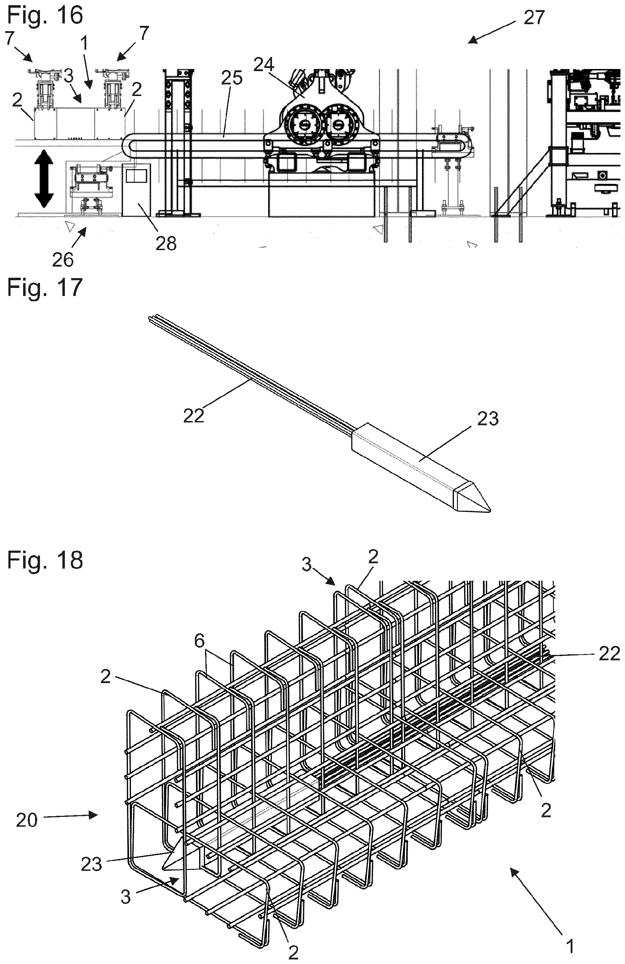

Fig. 16 zeigt, dass die Bewehrungskorbproduktionsanlage 27 eine Rollenbahn 25 umfasst, welche von dem Einlegeroboter 24 mit Bewehrungslängsstäben 22 bestückt wird und (dies ist im Allgemeinen jedoch nicht erforderlich) mit der Transportachse 13 wechselwirkt.

Der Bewehrungskorb 1 liegt auf einem höhenverstellbaren Tisch auf, um das Einbringen von Bewehrungslängsstäben 22 zu erleichtern.

In Fig. 17 ist ein Bewehrungslängsstab 22 vergrößert dargestellt, wobei der Bewehrungslängsstab 22 an einem freien Ende an einem Dorn 23 zum Einschieben in den Bewehrungskorb 1 angeordnet ist.

Fig. 18 zeigt den Prozess des Einbringens eines Bewehrungslängsstabes 22 in den Bewehrungskorb 1 anschließend an die automatisierte Fixierung der beiden Bewehrungskorbteile 2.

Die Bewehrungskorbteile 2 sind in dem Überlappungsbereich 3 zur Ineinanderschiebung der zwei Bewehrungskorbteile 2 frei von Bewehrungslängsstäben 22 bereitgestellt, wobei der Bewehrungslängsstab 22 von der Richtmaschine 5 bereitgestellt wird und anschließend an den Fixierungsprozessschritt der zwei Bewehrungskorbteile 2 automatisiert am Bewehrungskorb 1 befestigt wird.

Der Bewehrungslängsstab 22 wird automatisiert über den Dorn 23 an und in dem Bewehrungskorb 1 angebracht, wobei der über den Einlegeroboter 24 auf der Rollenbahn 25 abgelegte Bewehrungslängsstab 22 mitsamt des Dorn 23 in den Bewehrungskorb 1 manövriert wird.

Anschließend wird der Dorn 23 automatisiert vereinzelt und in einem Magazin zwischengelagert.

## Patentansprüche

1. Verfahren zur automatisierten Herstellung eines Bewehrungskorbes (1), **gekennzeichnet durch** die folgenden, insbesondere in chronologischer Reihenfolge durchzuführenden, Verfahrensschritte:
- wenigstens zwei räumlich voneinander gesonderte Bewehrungskorbteile (2) für den Bewehrungskorb (1) werden bereitgestellt,
- die wenigstens zwei Bewehrungskorbteile (2) werden automatisiert bereichsweise ineinandergeschoben, sodass sich ein gemeinsamer und bereichsweise über die wenigstens zwei Bewehrungskorbteile (2) erstreckender Überlappungsbereich (3) bildet, und
- die wenigstens zwei Bewehrungskorbteile (2) werden in dem gemeinsamen Überlappungsbereich (3) automatisiert relativ zueinander zur Bildung des Bewehrungskorbes (1) fixiert.

2. Verfahren nach Anspruch 1, wobei wenigstens einer der folgenden vorbereitenden Verfahrensschritte zur Bereitstellung der wenigstens zwei Bewehrungskorbteile (2), vorzugsweise automatisiert, durchgeführt wird:
- ein Bewehrungsstabcoil (4) wird durch wenigstens eine Richtmaschine (5) begradigt und in Form einer Vielzahl an Bewehrungsstäben (6) mit vordefiniertem Abmaß abgelängt
- die Vielzahl an Bewehrungsstäben (6) wird, vorzugsweise durch einen Roboterarm (7), in einem vordefinierten Raster angeordnet
- die Vielzahl an Bewehrungsstäben (6) wird, vorzugsweise über Widerstandspunktschweißen durch eine Schweißeinrichtung (8), stoffschlüssig miteinander verbunden und/oder, vorzugsweise mittels einer Verbindungsvorrichtung, über Befestigungsmittel, vorzugsweise in Form von Draht, lagesicher zueinander fixiert, sodass eine Bewehrungsmatte (11) gebildet wird
- die Bewehrungsmatte (11) wird durch ein Transportmittel (12), vorzugsweise Transportachse (13) oder Roboterarm (7), manövriert und/oder durch eine Mattenbiegemaschine (14) in Form eines Bewehrungskorbteiles (2) gebogen.

3. Verfahren nach Anspruch 1 oder 2, wobei die wenigstens zwei Bewehrungskorbteile (2) über ein Transportmittel (12) in Form eines Roboterarmes (7) und/oder in Form einer Transportachse (13) ineinandergeführt werden.

4. Verfahren nach einem der vorangehenden Ansprüche, wobei über wenigstens eine Sensorik (15), vorzugsweise Distanzlaser, eine Position wenigstens eines Bewehrungsstabes (6) zumindest eines Bewehrungskorbteiles (2) zur Vermeidung von Kollisionen mit einem Roboterarm (7) bestimmt wird.

5. Verfahren nach einem der vorangehenden Ansprüche, wobei ein Roboterarm (7), vorzugsweise eine Klemmgreifvorrichtung (16) des Roboterarms (7), die wenigstens zwei Bewehrungskorbteile (2) zur Fixierung von Bewehrungsstäben (6) der wenigstens zwei Bewehrungskorbteile (2) aufnimmt, wobei vorzugsweise vorgesehen ist, dass der Roboterarm (7) die Bewehrungsstäbe (6) entgegen der Schwerkraft von unten her greift und/oder die Bewehrungsstäbe (6) zunächst lose auf dem Roboterarm (7) aufliegen und anschließend durch die Klemmgreifvorrichtung (16) umschlossen werden und/oder der Roboterarm (7) die Bewehrungsstäbe (6) im Wesentlichen parallel zueinander zusammendrückt.

6. Verfahren nach einem der vorangehenden Ansprüche, wobei ein Roboterarm (7), vorzugsweise eine Schweißeinrichtung (8) oder Verbindungsvorrichtung, die wenigstens zwei Bewehrungskorbteile (2), vorzugsweise über wenigstens einen Schweißunkt oder Befestigungsmittel, miteinander relativ zueinander fixiert.

7. Verfahren nach einem der vorangehenden Ansprüche, wobei die Aufnahme der wenigstens zwei Bewehrungskorbteile (2) und die Fixierung der wenigstens zwei Bewehrungskorbteile (2) durch selbigen Roboterarm (7) durchgeführt werden, wobei der Roboterarm (7) vorzugsweise als Zentrier-Schweiß-Greifarm (17) ausgebildet ist.

8. Verfahren nach einem der vorangehenden Ansprüche, wobei der Bewehrungskorb (1) mit einer von einer Quaderform (18) abweichenden Geometrie, insbesondere T-Form (19), L-Form (20), X-Form (21) oder dergleichen, gebildet wird.

9. Verfahren nach einem der vorangehenden Ansprüche, wobei wenigstens einer der wenigstens zwei Bewehrungskorbteile (2) in dem Überlappungsbereich (3) zur Ineinanderschiebung der wenigstens zwei Bewehrungskorbteile (2) frei von Bewehrungslängsstäben (22) und/oder Bewehrungsstäben (6) bereitgestellt werden, wobei vorzugsweise vorgesehen ist, dass wenigstens ein Bewehrungslängsstab (22), besonders bevorzugt von einer gegebenenfalls vorhandenen Richtmaschine (5), bereitgestellt wird und anschließend an den Fixierungsprozessschritt der wenigstens zwei Bewehrungskorbteile (2), besonders bevorzugt automatisiert, am Bewehrungskorb (1) befestigt wird.

10. Verfahren nach Anspruch 9, wobei der wenigstens eine Bewehrungslängsstab (22), vorzugsweise automatisiert, über wenigstens einen Dorn (23) an und/oder in dem Bewehrungskorb (1) angebracht wird, wobei wenigstens ein Roboterarm (7), vorzugsweise Einlegeroboter (24), den wenigstens einen Bewehrungslängsstab (22) auf einer Rollenbahn (25) ablegt und/oder der wenigstens eine Bewehrungslängsstab (22) durch den Roboterarm (7) oder die Rollenbahn (25) in den wenigstens einen Dorn (23) oder den Bewehrungskorb (1) eingeschoben wird, wobei der wenigstens eine Dorn (23) zusammen mit dem wenigstens einen Bewehrungslängsstab (22) in den Bewehrungskorb (1) eingeschoben wird, wobei vorzugsweise vorgesehen ist, dass der wenigstens eine Dorn (23) automatisiert vereinzelt und/oder in einem Magazin zwischengelagert wird.

11. Vorrichtung (26), insbesondere Bewehrungskorbproduktionsanlage (27), zur automatisierten Herstellung eines Bewehrungskorbes (1), insbesondere über ein Verfahren nach einem der vorangehenden Ansprüche, umfassend
- wenigstens einen Roboterarm (7), welcher eine Schweißeinrichtung (8) und/oder eine Verbindungsvorrichtung zum Fixieren von Bewehrungskorbteilen (2) und eine Klemmgreifvorrichtung (16) zum Ineinanderschieben von Bewehrungskorbteilen (2) und
- wenigstens eine Steuerungs- und/oder Regelungseinrichtung (28) zur Steuerung des Roboterarms (7), wobei die Steuerungs- und/oder Regelungseinrichtung (28) dazu konfiguriert ist, den Bewehrungskorb (1) zumindest abschnittsweise automatisiert zu fertigen, wobei insbesondere vorgesehen ist, dass die Steuerungs- und/oder Regelungseinrichtung (28) dazu eingerichtet ist, wenigstens zwei Bewehrungskorbteile (2) ineinanderzuschieben und miteinander zu fixieren.

12. Vorrichtung (26) nach Anspruch 11, wobei die Schweißeinrichtung (8) und/oder die Verbindungsvorrichtung und die Klemmgreifvorrichtung (16) an einem gemeinsamen Grundkörper (29) bewegungsgekoppelt und/oder in örtlicher Nähe zueinander angeordnet sind.

13. Vorrichtung (26) nach Anspruch 11 oder 12, wobei der Roboterarm (7)
- als Mehrachsroboterarm ausgestaltet ist und/oder
- eine lineare Bewegungseinrichtung (30) umfasst und/oder
- eine Schweißzange (31) mit integriertem Schweißbrenner (32) umfasst und/oder
- eine Stromquelle (33) und/oder eine Drahtspule (34) umfasst und/oder
- eine Sensorik (15) zur Lagebestimmung und/oder Distanzbestimmung umfasst.

14. Vorrichtung (26) nach einem der Ansprüche 11 bis 13, wobei die Vorrichtung (26) eine Richtmaschine (5) und/oder einen Einlegeroboter (24) und/oder eine Rollenbahn (25) und/oder eine Transportachse (13) und/oder eine Mattenbiegemaschine (14) umfasst.

15. Vorrichtung (26) nach einem der Ansprüche 11 bis 14 mit wenigstens zwei Bewehrungskorbteilen (2), welche dazu ausgebildet sind, zur Bildung eines Bewehrungskorbes (1) mit von einer Quaderform (18) abweichender Geometrie mit vordefiniertem Überlappungsbereich (3) zur Bildung eines Bewehrungskorbes (1) ineinandergeschoben zu werden, wobei vorzugsweise vorgesehen ist, dass wenigstens einer der wenigstens zwei Bewehrungskorbteile (2) in dem vordefinierten Überlappungsbereich (3) zum Ineinanderschieben bewehrungslängsstabfrei und/oder bewehrungsstabfrei ausgestaltet ist.
